# EUROPEAN PATENT SPECIFICATION

(11) **EP 1 515 842 B1**
(45) Date of publication and mention of the grant of the patent: **14.05.2008**
(21) Application number: 03740715.2
(22) Date of filing: 10.06.2003
(51) Int. Cl.: B32B 13/12, B32B 3/24, E02D 31/00

(54) **WATERPROOFING MATERIAL**
WASSERDICHTENDES MATERIAL
MATERIAU HYDROFUGE

(30) Priority: 12.06.2002 GB 0213434
(43) Date of publication of application: 23.03.2005
(73) Proprietor: RAWELL GROUP HOLDINGS LIMITED, Wirral, Merseyside CH47 4AZ (GB)
(72) Inventor: FLYNN, Bryan Nicholas, Heswall, Merseyside L6 2UV (GB)
(74) Representative: Barker, Rosemary Anne
(86) International application number: PCT/GB2003/002490
(87) International publication number: WO 2003/106166

(56) References cited:
- WO-A-94/05863
- WO-A-97/36060
- US-B1- 6 335 089
- DATABASE WPI Section Ch, Week 199346 Derwent Publications Ltd., London, GB; Class A93, AN 1993-365885 XP002255338 & JP 05 272121 A (ASAHI CHEM IND CO LTD), 19 October 1993 (1993-10-19)

## Description

This invention concerns a waterproofing material in sheet form comprising a core layer, which incorporates swellable bentonite clay, sandwiched between respective carrier layers.

Such material is used as a liner to retain water in artificial ponds, lakes, lagoons etc. It is also used for lining and covering landfill waste deposit sites where the ground below has to be protected against leakage of contaminated liquid. It is used for a similar function and laid below petrol (gasolene) stations or comparable sites to prevent contamination of the water table by spillage of such material. It may also be used more generally as a waterproof layer below buildings and other structures and as a roofing material.

In one form, the core layer comprises bentonite clay in particulate or granular form. It is produced as a mat, transportable in rolls, and has to be wetted after installation so that the clay absorbs water before it becomes impermeable. Material of this form is described in EP-A-0059625, EP-A-0246311, WO 97/36060 and GB2202185. If the mat is damaged in transit or the in-situ wetting is uneven or insufficient the uniformity and reliability of the waterproofing layer may be suspect.

In another form, the core layer of bentonite clay is already partially hydrated by being mixed with water, and variable optional dissolved substances, to form a plastic mass and then extruded or rolled to sheet form. Thus, the material is already waterproof before installation and the impermeability is uniform. However, such material is still susceptible to damage during transport and installation. Material of this form is described in WO 94/05863 and EP-A-0719822.

Both forms of product should ideally be covered with earth or similar immediately they are installed because it is only when the bentonite layer is constrained by an adequate load, that its absorption of water results in the formation of a barrier to passage of water therethrough. Also, once laid in position, these materials, which are generally only about 0.5-2cm thick, should not be walked upon or driven over until they are properly covered by earth or rubble etc, as that could easily damage the integrity of the layer which is or is to become waterproof.

The form of material which includes the already waterproof, partially hydrated bentonite formed into a sheet from a plastic mass is especially susceptible to damage by excess pressure in local areas (i.e. walking upon or driving over) as the tensile strength of the bentonite layer is low and it is easily displaced or ruptured. Moreover, displacement of the bentonite containing layer is exacerbated if the material is wetted, when it can become more like a slurry or paste than a stiff, plastic mass. Therefore, this type of material must not be left exposed to rain or it will not be able to fulfil its function.

An object of the invention is to reduce the susceptibility of the latter form of waterproofing material to on-site damage by rainfall or local pressure.

According to the invention a waterproofing material in sheet form comprising a core layer, which incorporates swellable bentonite clay, arranged between respective carrier layers, one of which comprises an impermeable sheet of plastics material, and the other of which is permeable, is characterised in that the core layer comprises a semi-hydrated bentonite clay composition which has been rolled or extruded to sheet form, and in that reinforcing means is embedded in the core layer, said reinforcement means comprising at least one flexible perforate element in the form of a grid or mesh or perforated web which is bonded to the impermeable plastics layer of the first carrier layer, but not to the permeable layer.

Hitherto, the carrier layers for such materials have usually comprised woven or non-woven textile fabrics, which are permeable, it being necessary to allow water to permeate into the core clay containing layer after the material is installed on site and covered to enable it to swell and provide a long term substantially impermeable layer.

However, materials of this type, including the applicant's own 'Slabseal' product, are known wherein one of the carrier layers is an impermeable membrane of plastics material. Provided this layer is uppermost when the material is laid, or outermost when stored in roll form, it reduces any rain damage to the material. Subsequently, in-situ, water ingress still takes place adequately through the lower permeable carrier layer.

The perforate reinforcement element, which is conveniently a mesh or grid of plastics material, reduces displacement (i.e. spread) of the core clay containing layer in the event of local pressure, i.e. if the material is inadvertently walked or driven upon before it is properly covered, i.e. overfilled.

The perforate material needs to be flexible so that it can conform to the substrate over which the composite material is laid. It is bonded to only one of the carrier layers so that the composite material can still be rolled for storage and transport purposes, which makes it easier to handle and install. It also has advantages for manufacture as it enables the impermeable membrane to be physically secured to the clay containing core layer, by means of the mesh or grid. The other, permeable carrier layer, when formed of textile fibres already tends to be somewhat embedded, adhered or physically keyed to the clay-contained layer when the latter is of the type formed from a deformable plastics mass (but less so when it is particulate).

The clay containing core layer may also incorporate up to 50% pulp fibre waste material, a waste product of pulp mills in the paper industry, which comprises mostly cellulose fibres of very short length and other waste products of the pulping process. This improves the tensile strength of the clay containing layer (see US 6,335,089). In combination with the perforate reinforcement bonded to the impermeable carrier layer, it has particular advantages as the clay in the core mixture will preferentially swell and expand into the apertures or interstices of the perforate element when the composite material is wetted. The force thereby generated will enhance the tensile strength and waterproofing properties of the composite.

The invention will be described further, by way of example, with reference to the accompanying drawing, in which:
Figure 1 is an exploded perspective view of a section of a preferred practical embodiment of the material of the invention; and
Figure 2 is a fragmentary cross-section of a small section of the same embodiment.

As illustrated, the exemplary embodiment comprises a core layer 10 of a semi-hydrated bentonite clay composition which has been rolled or extruded to sheet form and sandwiched between respective carrier layers 12, 14.

The first carrier layer 12, is intended, in use, to be the lowermost layer. It may therefore be termed a support layer. It must be permeable and is conveniently a woven or non-woven textile fabric, such as of polypropylene, polyester or nylon fibres, filaments or yarns.

The second carrier layer 14 is intended, in use, to be the uppermost layer. It may therefore be termed a cover layer. In accordance with the invention it must be impermeable, or substantially so, and it must have a flexible perforate reinforcing element 16 bonded thereto. The carrier layer 14 may conveniently consist of a plastics film or membrane, e.g. of polypropylene, or polyvinylchloride. However it may itself be a laminate of an impermeable film and a permeable material, as the latter may enhance adhesion to the core layer 10 or facilitate bonding to the reinforcement 16.

The reinforcing element 16 is preferably a grid or mesh of plastics material, e.g. polypropylene or polyvinylchloride. The aperture size is suitably from 1mm to about 1cm in either direction. The mesh or grid may have symmetrical or asymmetrical apertures, a thickness preferably in the region of only 1 to 2 mm for adequate flexibility, and strand density of anything in the region of 1 to 8 per cm.

As discussed in the applicant's earlier EP 0658231 (WO 94/05863) the core layer may be formed from an initial admixture of

| by weight | |
|---|---|
| 50 - 75% | bentonite clay in particulate form |
| 10 - 30% | water |
| up to 20% | alcohol (e.g. methanol or glycerol or both) |
| up to 7% | carboxymethyl cellulose |
| 5-20% | sodium polyacrylate |

All the constituents other than the clay are first mixed with the water. The resulting liquid is added to the clay and thoroughly mixed and kneaded to form a homogenous deformable mass which is then extruded to sheet form. The resulting sheet may be 2 or 3m wide.

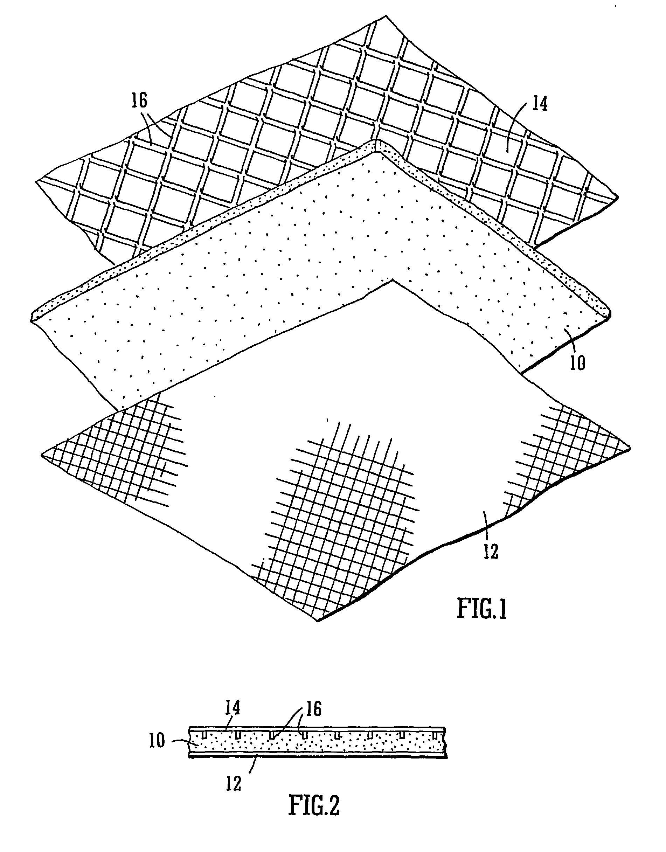

The core layer sheet 10 is united straightaway with the support layer 12 and the cover layer 14, with its bonded mesh reinforcement 16, the latter two layers being fed from supply rolls to the upper and lower surface of the core layer. The resulting material passes between rollers to press the reinforcing element 16 into the plastic mass of the core layer 10, as best seen in Figure 2, and the fabric of the support layer 12 into the other surface thereof. As shown in Figure 2, the mesh reinforcement 16 does not extend through the full thickness of the core layer 10, but is well embedded therein.

The material may then pass through heating means to evaporate water and other solvents, if present, from the core layer 10. It is then formed into a roll for transport or storage, the cover layer 14 outermost, as that is impermeable and will help protect it from rain damage if left in the open.

In modified embodiments, the core layer 10 may include up to 50% pulp fibre waste incorporated into a mixture having the constituents mentioned above, prior to extrusion.

Other materials or laminates may also be suitable as the carrier layers and the perforate reinforcement. The latter could be in the form of a perforated plastics web instead of a mesh.

## Claims

1. A waterproofing material in sheet form comprising a core layer, which incorporates swellable bentonite clay, arranged between respective carrier layers, one of which comprises an impermeable sheet of plastics material, and the other of which is permeable, **characterised in that** the core layer comprises a semi-hydrated bentonite clay composition which has been rolled or extruded to sheet form, and **in that** reinforcement means is embedded in the core layer, said reinforcement means comprising at least one flexible perforate element in the form of a grid or mesh or perforated web which is bonded to the impermeable plastics material of the first carrier layer, but not to the permeable layer.

2. A material according to claim 1 wherein the aperture size of the or each perforate element is in the range 1 to 10mm.

3. A material according to claim 1 or 2 wherein the impermeable sheet and the perforate element are formed of polypropylene or polyvinyl chloride.

4. A material according to any preceding claim wherein the core layer incorporates up to 50% pulp fibre waste material.

## Patentansprüche

1. Wasserdichtendes Material in Bahnform umfassend eine innere Schicht, die einen quellfähigen Betonitlehm enthält, die zwischen jeweiligen Trägerschichten angeordnet ist, von denen die eine eine undurchlässige Bahn aus Kunststoffmaterial aufweist und die andere durchlässig ist, **dadurch gekennzeichnet, dass** die innere Schicht eine teilhydratisierte Bentonitlehmzusammensetzung aufweist, die in eine Bahnform gewalzt oder extrudiert wurde, und **dadurch**, dass ein Verstärkungsmittel in die innere Schicht eingebettet ist, wobei das Verstärkungsmittel wenigstens ein flexibles perforiertes Element in Form eines Gitters oder Netzes oder perforierten Gewebes aufweist, das an das undurchlässige Kunststoffmaterial der ersten Trägerschicht gebunden ist, aber nicht an die durchlässige Schicht.

2. Material nach Anspruch 1, bei dem die Maschenweite des oder jedes perforierten Elements im Bereich von 1 bis 10 mm liegt.

3. Material nach Anspruch 1 oder 2, bei dem die undurchlässige Bahn und das perforierte Element aus Polypropylen oder Polyvinylchlorid gebildet sind.

4. Material nach einem der vorangehenden Ansprüche, bei dem die innere Schicht bis zu 50 % Zellstofffaserabfallmaterial enthält.

## Revendications

1. Matériau étanche à l'eau sous forme de feuille comprenant une couche centrale, laquelle intègre une argile bentonitique gonflante, disposée entre des couches supports respectives, l'une d'entre elles comprenant une feuille imperméable en matière plastique, et l'autre étant perméable, **caractérisé en ce que** la couche centrale comprend une composition à base d'argile bentonitique semi-hydratée qui a été laminée ou extrudée en forme de feuille, et **en ce que** des moyens de renforcement sont noyés dans la couche centrale, lesdits moyens de renforcement comprenant au moins un élément perforé souple sous forme d'un grillage ou d'un maillage ou d'une toile perforée qui est collé(e) à la matière plastique imperméable de la première couche support, mais pas à la couche perméable.

2. Matériau selon la revendication 1 dans lequel l'ouverture de maille de chaque ou de l'élément perforé se trouve dans la gamme allant de 1 à 10 mm.

3. Matériau selon la revendication 1 ou 2 dans lequel la feuille imperméable et l'élément perforé sont formés de polypropylène ou de polychlorure de vinyle.

4. Matériau selon l'une quelconque des revendications précédentes dans lequel la couche centrale intègre jusqu'à 50 % de déchets de fibres de pâte à papier.
